(19) Europäisches Patentamt
European Patent Office
Office européen des brevets

(11) **EP 1 190 344 B1**

(12) **FASCICULE DE BREVET EUROPEEN**

(45) Date de publication et mention
de la délivrance du brevet:
**30.07.2003 Bulletin 2003/31**

(21) Numéro de dépôt: **00929626.0**

(22) Date de dépôt: **18.05.2000**

(51) Int Cl.$^7$: **G06F 17/16**

(86) Numéro de dépôt international:
**PCT/FR00/01337**

(87) Numéro de publication internationale:
**WO 00/072187 (30.11.2000 Gazette 2000/48)**

(54) **MULTIPLIEUR DE NOMBRES COMPLEXES**

MULTIPLIZIERER FÜR KOMPLEXE ZAHLEN

COMPLEX NUMBER MULTIPLIER

(84) Etats contractants désignés:
**GB IT**

(30) Priorité: **20.05.1999 FR 9906425**

(43) Date de publication de la demande:
**27.03.2002 Bulletin 2002/13**

(73) Titulaire: **FRANCE TELECOM**
**75015 Paris (FR)**

(72) Inventeurs:
• **MONTALVO, Luis**
**F-38580 Allevard (FR)**
• **ARNDT, Marylin**
**F-38330 Biviers (FR)**

(74) Mandataire: **Casalonga, Axel**
**BUREAU D.A. CASALONGA - JOSSE**
**Paul-Heyse-Strasse 33**
**80336 München (DE)**

(56) Documents cités:
• **SHIN K -W ET AL: "A COMPLEX MULTIPLIER ARCHITECTURE BASED ON REDUNDANT BINARY ARITHMETIC" IEEE INTERNATIONAL SYMPOSIUM ON CIRCUITS AND SYSTEMS,US,NEW-YORK, NY: IEEE, 1997, pages 1944-1947, XP000802958 ISBN: 0-7803-3584-8**
• **YUN-NAN CHANG ET AL: "High-performance digit-serial complex-number multiplier-accumulator" PROCEEDINGS INTERNATIONAL CONFERENCE ON COMPUTER DESIGN. VLSI IN COMPUTERS AND PROCESSORS (CAT. NO.98CB36273), PROCEEDINGS INTERNATIONAL CONFERENCE ON COMPUTER DESIGN. VLSI IN COMPUTERS AND PROCESSORS, AUSTIN, TX, USA, 5-7 OCT. 1998, pages 211-213, XP002132025 1998, Los Alamitos, CA, USA, IEEE Comput. Soc, USA ISBN: 0-8186-9099-2**
• **WEI B W Y ET AL: "A COMPLEX-NUMBER MULTIPLIER USING RADIX-4 DIGITS" PROCEEDINGS OF THE SYMPOSIUM ON COMPUTER ARITHMETIC,US,LOS ALAMITOS, IEEE COMP. SOC. PRESS, vol. SYMP. 12, 1995, pages 84-90, XP000548637 ISBN: 0-7803-2949-X cité dans la demande**
• **LYU C N ET AL: "REDUNDANT BINARY BOOTH RECORDING*" PROCEEDINGS OF THE SYMPOSIUM ON COMPUTER ARITHMETIC,US,LOS ALAMITOS, IEEE COMP. SOC. PRESS, vol. SYMP. 12, 1995, pages 50-57, XP000548633 ISBN: 0-7803-2949-X cité dans la demande**

## Description

La présente invention concerne un multiplieur rapide de nombres complexes consommant peu d'énergie.

Dans les systèmes de communication actuels, les informations sont généralement traitées de façon numérique. La numérisation améliore la qualité et les performances des systèmes de transmission. Par ailleurs, l'augmentation du débit de données transmises et le développement de logiciels de plus en plus puissants contraignent les systèmes de transmission à traiter une grande quantité de données en un temps record, d'où l'importance des modules de calculs extrêmement performants. L'un de ces modules est le multiplieur de nombres complexes que l'on trouve dans pratiquement tout dispositif de traitement de signal tel que les téléphones mobiles, par exemple.

Une multiplication de deux nombres complexes fait généralement intervenir quatre opérations de multiplications réelles et deux opérations d'addition et de soustraction réelles. En effet, la multiplication de deux nombres complexes (A+jB) et (C+jD) peut être décomposée de la manière suivante :

$$(A+jB) (C+jD) = (AC - BD) + j(AD + BC) = R+jI.$$

Avec R = AC - BD, partie réelle du produit.

et I = AD + BC, partie imaginaire du produit.

Cette décomposition fait bien intervenir quatre multiplications réelles (AC; BD; AD et BC) et deux additions et multiplications réelles (AC - BD et AD + BC).

A, B, C et D sont des nombres binaires représentés selon une convention en complément à deux.

Pour un nombre positif, le premier bit, appelé "bit de signe", est égal à zéro, et les bits suivants codent en binaire naturel la valeur absolue du nombre décimal considéré.

Pour un nombre négatif, le bit de signe est égal à un, et les bits suivants codent en binaire complément à deux la valeur absolue du nombre décimal considéré.

Les opérations de multiplications réelles (AC, AD, BD et BC) sont particulièrement complexes à mettre en oeuvre.

Dans l'état de la technique antérieure, on utilise une technique de mise en facteur de façon à réduire le nombre d'opérations de multiplication au profit d'opérations d'addition et de soustraction. Cette factorisation, appelée "transformation par réduction de force" permet d'aboutir à trois opérations de multiplication et cinq opérations d'addition et soustraction. Une difficile opération de multiplication a été échangée contre trois nouvelles opérations d'addition et soustraction.

$$R = AC - BD = (A - B) C + (C - D) B$$

$$I = AD + BC = (A + B) D + (C - D) B$$

Les cinq opérations d'addition et soustraction sont

$$A - B, A + B, C - D, (A - B) C + (C - D) B,$$

$$(A + B) D + (C - D) B.$$

Les trois opérations de multiplication sont

$$(A - B) C, (A + B) D, (C - D) B.$$

Les termes (A - B), (A + B) et (C - D) sont appelés "opérations de pré-multiplication" car ils sont destinés à alimenter des multiplieurs réels inclus dans un multiplieur de nombres complexes.

Cette méthode présente un réel intérêt au niveau de la consommation d'énergie, car un multiplieur réel en moins est synonyme de gain de place sur le circuit électronique, donc de baisse de consommation d'énergie, la surface utilisée par un multiplieur réel étant généralement trois fois supérieure à celle d'un additionneur réel.

Cependant, le temps d'exécution de calcul d'un multiplieur de nombres complexes utilisant la transformation par réduction de force, est supérieur à un multiplieur de nombres complexes direct effectuant les quatre opérations de multiplication et les deux opérations d'addition et soustraction. La rapidité du multiplieur de nombres complexes est par conséquent dégradée.

Cette limitation de vitesse est essentiellement due à la propagation de la retenue du bit de poids le plus faible (LSB, least significant bit, en langue anglaise) vers le bit de poids le plus fort (MSB, most significant bit, en langue anglaise) au cours d'opérations d'addition et de soustraction.

On connaît des dispositifs de multiplieurs de nombres complexes utilisant la transformation par réduction de force tout en améliorant la vitesse d'exécution du calcul par rapport à la méthode directe. Un tel dispositif a été décrit par B. W. Y. WEI, H. Du et H. Chen dans "A Complex-Number Multiplier Using Radix-4 Digits", pages 84-90, 12éme "Symposium on Computer Arithmetic", Bath, Angleterre, 19 à 21 Juillet 1995.

Dans cette méthode, les nombres sont mis sous un format binaire redondant, présentant de nombreux avantages. Par exemple, le bit d'un nombre binaire redondant en base deux peut prendre trois valeurs : -1, 0 ou 1, et permet au nombre décimal de valeur 5 d'être représenté, en format binaire redondant, par :

$$[0101], [011\bar{1}], [1\bar{1}1], [1\bar{1}01] \text{ ou } [10\bar{1}\bar{1}].$$

Un nombre décimal peut ainsi être représenté par cinq nombres binaires redondants. Cette redondance permet de réduire les règles d'addition de deux nombres binaires en se limitant, pour chaque bit du résultat, à ne considérer que les deux bits de même rang des deux opérandes. Ainsi, les additions et les soustractions sont réalisées sans propagation de retenue. Le temps d'exécution d'une opération d'addition ou de soustraction reste constant indépendamment de la longueur des opérandes. En outre, cette représentation ne nécessite aucun dispositif spécifique pour tenir compte du bit de signe.

Dans la méthode proposée par WEI et Al., on délivre à l'entrée d'un premier étage composé de deux soustracteurs et d'un additionneur, les nombres binaires en complément à deux A, B, C et D, puis celui-ci génère à la sortie les résultats (A-B), (A+B) et (C-D) dans un format binaire redondant.

Ces résultats, également appelés "produits partiels", sont représentés par un codage spécifique en base deux. Les modules formant le premier étage et réalisant les trois opérations d'addition et de soustraction, ne comportent que des inverseurs.

Ces résultats subissent ensuite une conversion de la base deux à une base quatre dans un second étage afin de réduire la longueur des nombres binaires formant ces résultats et d'alimenter trois multiplieurs de nombres réels dans un troisième étage.

Le résultat final est fourni par deux additionneurs réels qui, à partir des résultats des trois multiplieurs réels, génèrent une partie réelle et une partie imaginaire. Cependant, ce dispositif comporte une grande quantité de composants, ce qui est pénalisant en terme de dissipation d'énergie.

L'invention vise à apporter une solution à ce problème en réduisant le nombre de portes logiques nécessaire sur le multiplieur de nombres complexes de façon à diminuer la consommation.

Un but de l'invention est de réduire le temps d'exécution de la multiplication de deux nombres complexes.

D'une façon générale, le multiplieur de nombres complexes comprend une entrée à laquelle font suite quatre étages de traitement. L'entrée permet de recevoir la partie réelle A et la partie imaginaire B d'un premier nombre complexe, et la partie réelle C et la partie imaginaire D d'un deuxième nombre complexe, les nombres A, B, C, D étant des nombres binaires codés en complément à deux.

Le premier étage de traitement comporte des moyens de soustraction aptes à effectuer les opérations A-B et C-D, le résultat de chaque soustraction étant un nombre binaire en base deux avec un format binaire redondant et un codage à emprunt sauvegardé ("borrow-save" en langue anglaise), et un module additionneur apte à effectuer l'opération A+B, le résultat de cette addition étant un nombre binaire en base deux avec un format redondant et un codage à retenue sauvegardée ("carry-save" en langue anglaise).

Le deuxième étage de traitement comporte des moyens de conversion aptes à convertir les nombres délivrés par le premier étage de traitement en des nombres binaires codés en base quatre avec un format redondant.

Le troisième étage de traitement comporte des moyens de multiplication aptes à effectuer les opérations (A-B)C, (C-D)B et (A+B)D, le résultat de ces opérations étant des nombres codés en base deux avec un format redondant.

Enfin, le quatrième étage de traitement comporte deux additionneurs pour élaborer la partie réelle et la partie imaginaire du produit des deux nombres complexes d'entrée à partir des nombres délivrés par le troisième étage de traitement, ces parties réelles et imaginaires étant en base deux selon un format binaire redondant.

Cette mise en oeuvre est réalisée conformément à la transformation par réduction de force. Celle-ci fait donc intervenir trois opérations de multiplication et cinq opérations d'addition. L'ensemble des résultats des quatre étages du multiplieur complexe est en format binaire redondant. Ce format permet de réaliser les opérations d'addition et de soustraction avec une propagation de retenue limitée à un bit. De ce fait, le gain de temps de traitement obtenu en utilisant le multiplieur selon l'invention est remarquable par rapport, par exemple, à un multiplieur réalisant la transformation par réduction de force avec un format binaire en complément à deux.

Selon un mode de mise en oeuvre de l'invention, les moyens de soustraction comportent deux modules distincts aptes à effectuer les opérations A-B et C-D. Avantageusement, les modules soustracteurs et additionneurs sont réalisés uniquement par câblage.

Chaque module de soustraction admet à son entrée deux nombres binaires en complément à deux, puis effectue une transformation de façon à obtenir un résultat en format binaire redondant, c'est-à-dire deux bits codant un nombre décimal. Le type de codage utilisé pour faire correspondre les deux bits au nombre décimal est le codage à emprunt sauvegardé, ce qui permet de réaliser les opérations de soustraction avec un simple câblage sans aucune porte logique. Le coût de réalisation de ces deux blocs est pratiquement nul. L'opération d'addition (A+B) résulte également en un simple câblage puisque le résultat est en format binaire redondant avec un codage à retenue sauvegardée, ce qui est connu de l'homme du métier. Ainsi, l'ensemble du premier étage est caractérisé par un coût quasiment nul.

Dans un mode de réalisation préféré, les moyens de multiplication comportent trois multiplieurs réels distincts aptes à effectuer respectivement les opérations (A-B)C, (C-D)B et (A+B)D. Chaque multiplieur comporte avantageusement des moyens internes aptes à effectuer l'addition de deux produits partiels X et Y en effectuant l'opération X-$\bar{Y}$ -1, où $\bar{Y}$ désigne le complément à 1 de Y.

En effet, l'addition interne de deux nombres (X+Y) est réalisée en utilisant la transformation suivante :

$$X+Y = X-(-Y) = X-(\bar{Y}+1) = (X-\bar{Y})-1.$$

Les moyens internes des multiplieurs réels comportent de préférence un inverseur pour délivrer le nombre $\bar{Y}$ et un moyen de câblage pour réaliser la soustraction X - $\bar{Y}$ .

Selon un mode de mise en oeuvre avantageux de l'invention, les multiplieurs et les additionneurs réels intègrent un arbre binaire en codage à emprunt sauvegardé.

Le fait d'utiliser un quatrième étage de conversion de base deux en base quatre, a permis de diviser par deux le nombre de produits partiels à additionner dans les multiplieurs par rapport à un multiplieur conventionnel opérant à l'aide des nombres binaires codés en complément à deux. L'utilisation en outre d'un codage à emprunt sauvegardé dans les multiplieurs selon l'invention permet également de diviser par deux le nombre de produits partiels à additionner au niveau des additionneurs internes, soit une division par quatre par rapport à un multiplieur conventionnel.

Le type de multiplieur ainsi décrit comporte une structure cellulaire régulière et dissipe une puissance inférieure à un multiplieur conventionnel.

Dans une variante du multiplieur complexe selon l'invention, les multiplieurs et les additionneurs réels intègrent un arbre binaire en codage à emprunt sauvegardé légèrement modifié. La modification vient du fait que toute paire de bits "11", est transformée en une paire de bits "00" à l'entrée des multiplieurs et additionneurs réels. Ceci permet de réaliser des additions internes rapides et peu consommatrices.

Il est décrit ci-après, à titre d'exemple nullement limitatif et en référence aux dessins annexés, un dispositif selon l'invention.

- La figure 1 illustre le principe le soustraction de deux nombres complément à deux; et
- la figure 2 est une vue d'ensemble du multiplieur de nombres complexes.
- la figure 3 est une vue du convertisseur à emprunt sauvegardé.
- la figure 4 est une vue du convertisseur à retenue sauvegardée.
- la figure 5 est une vue du noyau logique commun aux deux convertisseurs à emprunt sauvegardé et retenue sauvegardée.
- la figure 6 est une vue d'un multiplieur réel de nombres redondants.
- la figure 7 est une vue d'un additionneur réel de nombres redondants.

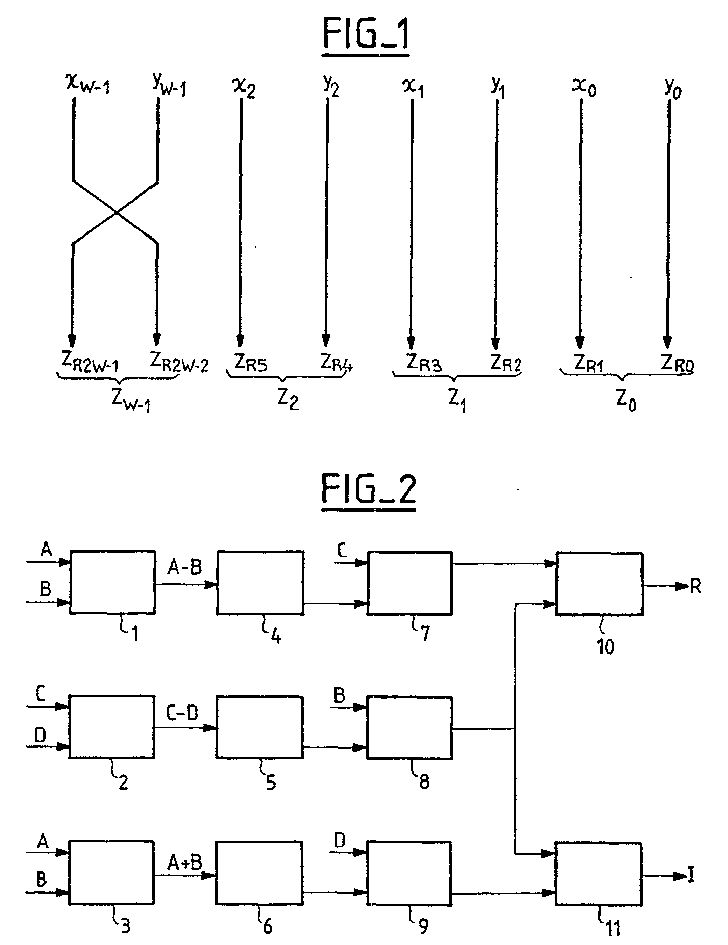

Tel qu'il est illustré sur la figure 1, la soustraction faisant intervenir deux nombres binaires codés en complément à deux X et Y, respectivement caractérisés par les W bits $x_i$ et $y_i$, permet d'aboutir à un résultat Z en format binaire signé.

$$X = - x_{W-1}2^{W-1} + \Sigma_{i=0}^{W-2} x_i 2^i$$

$$Y = -y_{W-1}2^{W-1} + \Sigma_{i=0}^{W-2} y_i 2^i$$

$$Z = X - Y = \Sigma_{i=0}^{W-2} z_i 2^i.$$

Le nombre Z comporte W bits pris dans l'ensemble (-1; 0; 1).

$$z_i = \begin{cases} x_i - y_i & \text{pour } 0 \leq i \leq w-2 \\ \\ y_i - x_i & \text{pour } i = w-1 \end{cases}$$

D'une façon pratique, réaliser l'opération X-Y consiste à prendre les W bits de X et les W bits de Y de façon à former un nombre binaire $Z_R$ de 2 W bits rangés par paires de bits. Chaque paire de bits de $Z_R$ est constituée d'un premier bit venant du premier opérande X et d'un deuxième bit venant du deuxième opérande Y, sauf la première paire de bits d'indice W-1 qui est constituée d'un premier bit venant du deuxième opérande Y et d'un deuxième bit venant du premier opérande X :

$$Z_R = y_{W-1}x_{W-1} \; x_{W-2}y_{W-2} \; x_{W-3}y_{W-3} \; ... \; x_0y_0.$$

La suite des opérations de multiplication est réalisée à partir de ce nombre $Z_R$ qui n'est en fait qu'une disposition particulière des bits des deux opérandes.

Après avoir obtenu $Z_R$, on le considère comme ayant fait l'objet d'un codage à emprunt sauvegardé, selon le tableau ci-dessous. On effectue alors le décodage de $Z_R$ selon ce tableau et on obtient la valeur de Z.

| codage à emprunt sauvegardé. | |
|---|---|
| paire de bits | chiffre signé |
| 00 | 0 |
| 01 | -1 |
| 11 | 0 |
| 10 | 1 |

A titre d'exemple, pour réaliser la soustraction de deux nombres décimaux 5 et -2, on procède de la manière suivante :

| | |
|---|---|
| 5 = **0101** (codé en complément à deux) | $x_3 \; x_2 \; x_1 \; x_0$ |
| -2 = 1110 (codé en complément à deux) | $y_3 \; y_2 \; y_1 \; y_0$ |
| 5-(-2) = 7. | |

Le nombre $Z_R$ est alors égal à :

| | |
|---|---|
| $Z_R$ = 10 **11 01 10**. | $y_3 \; \mathbf{x_3} \; \mathbf{x_2} \; y_2 \; \mathbf{x_1} \; y_1 \; \mathbf{x_0} \; y_0$ |

Le nombre Z est alors égal à :

| | |
|---|---|
| $Z = 10\bar{1}1.$ | $(y_3\text{-}\mathbf{x_3}) \; (\mathbf{x_2}\text{-}y_2) \; (\mathbf{x_1}\text{-}y_1) \; (\mathbf{x_0}\text{-}y_0)$ |

Pour obtenir $Z_R$, il suffit de réaliser un câblage conformément à la figure 1, dans laquelle seule la première paire de câbles est croisée.

La soustraction (X-Y) est due à trois phénomènes :

a) les opérandes sont codées en complément à deux
b) une disposition particulière des opérandes par paire de bits
c) une conversion de cette disposition particulière en un nombre codé en binaire naturel en considérant que la disposition particulière est un nombre codé par emprunt sauvegardé (différent du complément à deux). Cependant cette étape c) n'est réalisée qu'à la fin de toutes les opérations nécessaires à l'obtention des parties réelles et imaginaires du résultat final de la multiplication de nombres complexes.

Pour passer de $Z_R$ à Z, on utilise le tableau du codage à emprunt sauvegardé.

Le nombre binaire $Z_R$ est alors un nombre binaire redondant avec un codage à emprunt sauvegardé.

Cette méthode a donc pour avantage de réaliser une soustraction à partir de deux nombres codés en complément à deux, sans comporter une seule porte logique.

La figure 2 montre une entrée recevant la partie réelle A et la partie imaginaire B d'un premier nombre complexe, et la partie réelle C et la partie imaginaire D d'un deuxième nombre complexe. Les nombres A, B, C et D sont des nombres binaires de W bits codés en complément à deux.

L'opération de multiplication de nombres complexes s'effectue sur quatre étages distincts.

Le premier étage permet de réaliser les opérations dites de pré-multiplication (A-B), (C-D) et (A+B) à l'aide de trois modules 1, 2 et 3. Les deux soustracteurs 1 et 2 réalisant les soustractions sont identiques à ceux illustrés sur la figure 1, c'est-à-dire un simple câblage, et les résultats obtenus A-B et C-D sont deux nombres binaires redondants comportant 2W bits avec un codage à emprunt sauvegardé.

Le module 3 est un additionneur connu de l'homme du métier et permet de réaliser l'opération (A+B), de façon à générer un résultat en format binaire redondant avec un codage à retenue sauvegardée. Sa mise en oeuvre se limite également à un simple câblage et le résultat comporte 2W bits.

Le deuxième étage comporte trois modules de conversion 4, 5, 6, permettant de passer de la base deux dans laquelle se trouve le produit partiel (A-B), (C-D) et (A+B) vers une base quatre. On réalise cette conversion afin de réduire le nombre de produits partiels.

Les nombres (A-B) et (C-D) sont des nombres binaires redondants dont chaque paire de bits selon le codage à emprunt sauvegardé représente un chiffre signé inclus dans l'ensemble (-1; 0; 1).

Le nombre (A+B) est un nombre binaire redondant dont chaque paire de bits selon le codage à retenue sauvegardée représente un chiffre signé inclus dans l'ensemble (0; 1; 2).

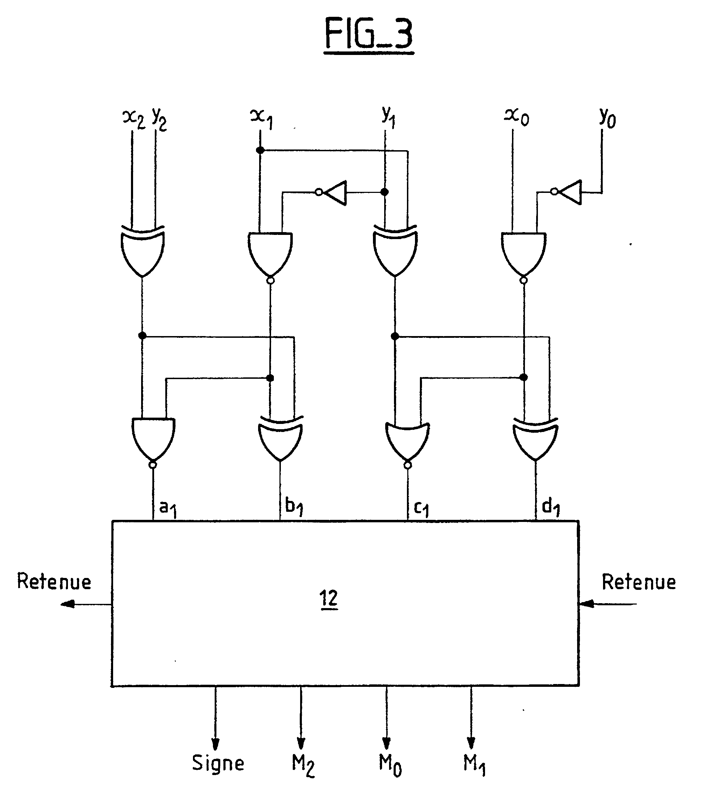

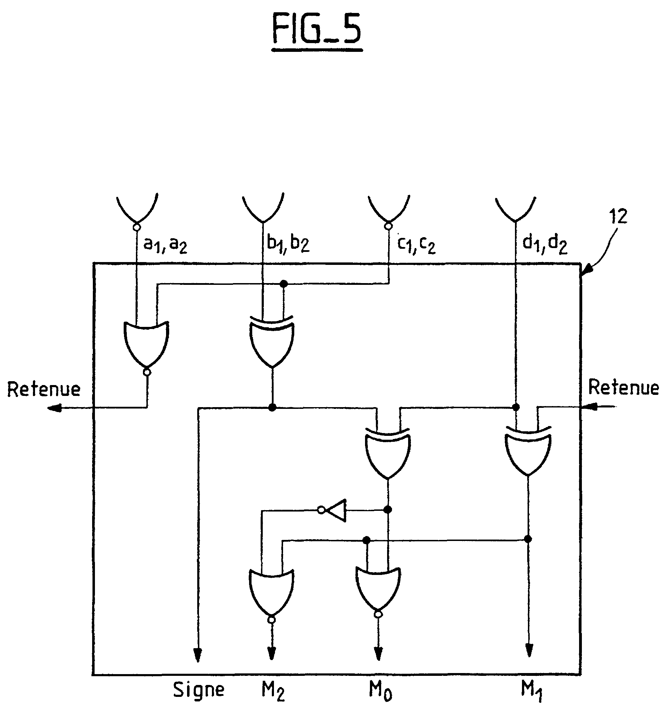

Les modules 4 et 5 sont des convertisseurs de BOOTH pour le codage à emprunt sauvegardé et permettent chacun, à partir des nombres A-B et C-D, de générer un nombre binaire redondant dans la base quatre. Les figures 3 et 5 montrent ce convertisseur de BOOTH à emprunt sauvegardé dans lequel les bits d'entrée sont pris six par six (avec une paire de bits superposée) de la manière suivante :

$$Z_R = y_{W-1}x_{W-1} \; x_{W-2}y_{W-2} \; x_{W-3}y_{W-3} \; \cdots \; x_4y_4 \; x_3y_3 \; \underbrace{x_2y_2 \; x_1y_1 \; x_0y_0}$$

$$\underbrace{\qquad\qquad\qquad\qquad}_{\text{Signe}M_2M_1M_0} \quad \underbrace{\qquad}_{\text{Signe}M_2M_1M_0} \quad \underbrace{\qquad}_{\text{Signe}M_2M_1M_0}$$

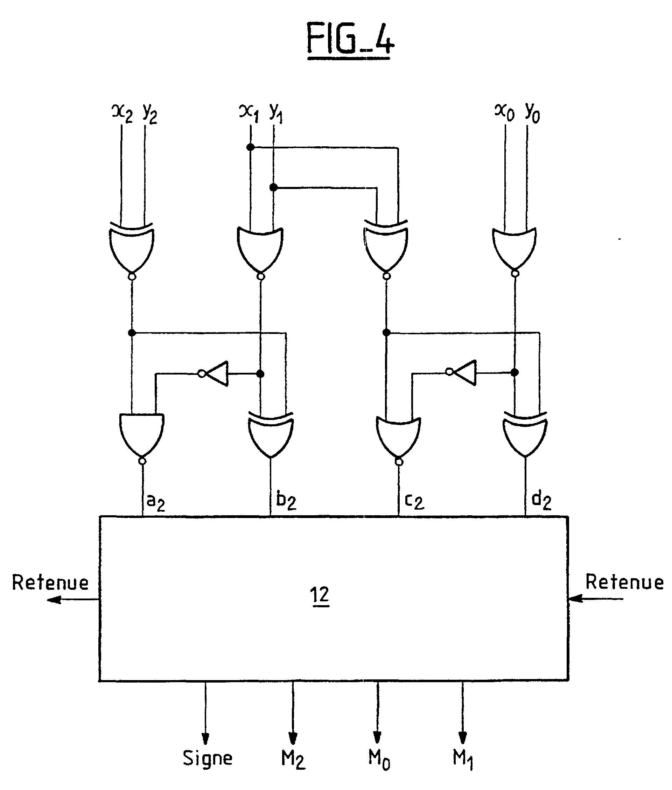

On introduit dans le convertisseur 4, 5, le nombre A-B avec 2W bits en format binaire redondant avec un codage à emprunt sauvegardé (base deux) et on obtient un nombre A-B avec 2W-2 bits en format binaire redondant à base quatre. La figure 3 montre une première partie constituée d'un circuit logique ayant quatre sorties a1, b1, c1, d1 lesquelles alimentent une seconde partie constituée d'un circuit logique 12 appelé noyau logique, représenté à la figure 5, qui est identique pour les deux convertisseurs des figures 3 et 4.

Le convertisseur 4, 5, génère un nombre binaire redondant dont les bits sont rangés par blocs de quatre, de façon à représenter un chiffre signé inclus dans l'intervalle (-2; -1; 0; 1; 2). Les quatre bits sont tels que le premier est un bit de signe (Signe), les trois bits suivants, respectivement M0, M1 et M2, représentent les valeurs 0; 1 et 2.

La figure 4 montre le convertisseur 6 intégrant un premier circuit logique de sorties a2, b2, c2, d2, et alimentant le noyau logique 12 de la figure 5. Ce convertisseur 6 réalise la même opération que les deux convertisseurs 4 et 5, mais avec en entrée le nombre binaire redondant avec un codage à retenue sauvegardée A+B.

Ces convertisseurs permettant de passer d'une base deux (-1; 0; 1) à une base quatre (-2; -1; 0; 1; 2) permettent de diviser par deux le nombre de produits partiels devant intervenir dans la multiplication réelle.

Pour plus de détails, on peut consulter la publication de Messieurs C. N. LYU et D. MATULA "Redundant Binary Booth Recoding", pages 50-57, 12ème "Symposium on Computer Arithmetic", Bath, Angleterre, 19 à 21 Juillet 1995.

Le troisième étage comporte trois multiplieurs identiques de nombres réels 7, 8 et 9.

Le multiplieur 7 admet comme données à l'entrée l'opérande (A-B) en base quatre et l'opérande C codé en complément à deux.

Le multiplieur 8 admet comme données à l'entrée l'opérande (C-D) en base quatre et l'opérande B codé en complément à deux.

Le multiplieur 9 admet comme données à l'entrée l'opérande (A+B) en base quatre et l'opérande D codé en complément à deux.

Ces multiplieurs de nombres réels 7, 8 et 9 sont connus de l'homme du métier, et celui-ci peut se reporter. pour plus de détails, à la publication de Monsieur H. MAKINO et Al., "An 8.8-ns 54*54-bit multiplier with high speed redundant binary architecture," IEEE Journal of Solid State Circuits, vol.31, Juin 1996.

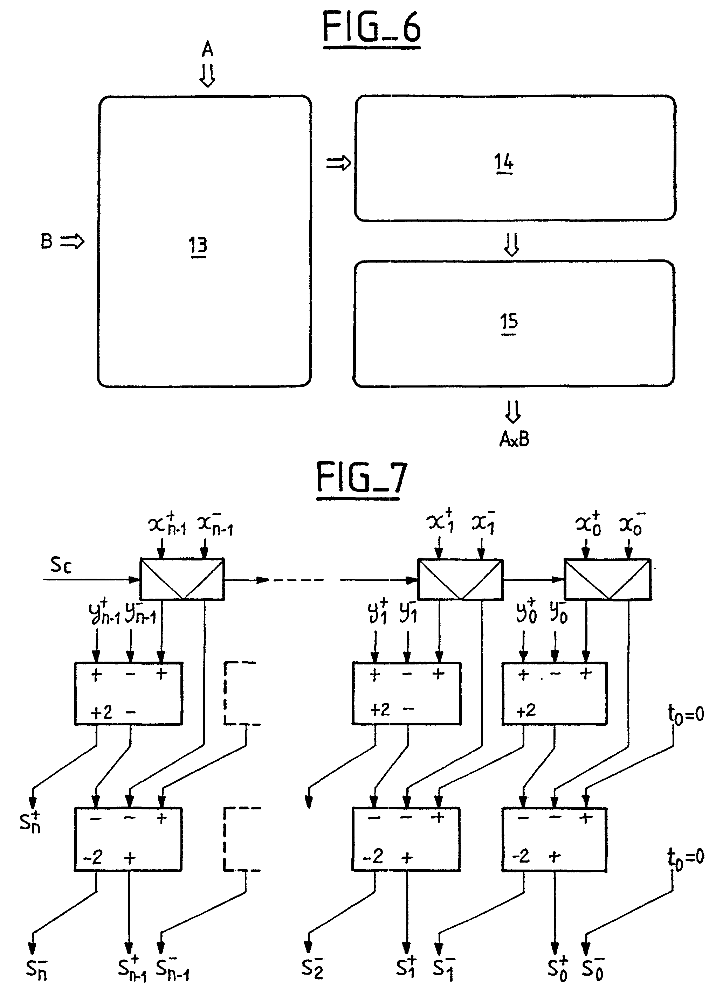

L'un de ces multiplieurs est représenté sur la figure 6. Brièvement, ce multiplieur comporte une première étape 13 de génération dans laquelle des produits partiels PP sont générés. Cette étape de génération réalise l'opération A+B = A-B-1, ce qui permet de n'intégrer comme porte logique, que des inverseurs. Les opérandes codés en complément à deux sont d'abord transformés (non représenté) en des nombres en format binaire redondant à base quatre.

L'addition de deux nombres A+B est réalisée de la manière suivante :

$$A+B = A - (-B)$$

En utilisant la représentation en complément à deux, on obtient -B en inversant tous les bits de B et en ajoutant "1" au bit ayant le poids le plus faible :

$$- B = \bar{B} + 1$$

$$A + B = A - \bar{B} - 1$$

Avec le codage à emprunt sauvegardé, soustraire "1" " correspond à ajouter (0,1) qui représente -1.

En utilisant le format binaire redondant, on obtient :

$$A + B = (A, \bar{B}) - 1 = (A,\bar{B}) + (0,1)$$

A titre d'exemple, l'addition de A **= 10100110** (-90) et
B = 01101101 (109) est réalisée de la manière suivante :

$$B = 10010010$$

$$-1 = (0,1)$$

$$A + B = (1,1)(0,0)(1,0)(0,1)(0,0)(1,0)(1,1)(0,0) + (0,1)$$

$$= (0\ 0\ 1\ -1\ 0\ 1\ 0\ 0) + (-1)$$

$$= 32 - 16 + 4 - 1$$

$$= 19$$

Produit Partiel PP = (1,1)(0,0)(1,0)(0,1)(0,0)(1,0)(1,1)(0,0)(0,1)

La seconde étape fait intervenir un arbre binaire 14 de WALLACE permettant d'obtenir un nombre binaire redondant à l'aide d'opérations parallèles d'addition des produits partiels PP.

Une troisième étape 15 de conversion permet d'obtenir le résultat final avec un codage à emprunt sauvegardé.

Les trois multiplieurs 7, 8 et 9 permettent d'obtenir trois nombres binaires redondants avec un codage à emprunt sauvegardé : (A-B) C, (C-D) B et (A+B) D.

Le quatrième étage comporte deux additionneurs réels 10 et 11 aptes à effectuer l'addition de deux nombres binaires redondants avec un codage à emprunt sauvegardé et générer un nombre binaire redondant avec un codage à emprunt sauvegardé. La figure 7 montre un additionneur/soustracteur agissant en temps qu'additionneur de deux nombres binaires redondants avec un codage à emprunt sauvegardé. Le premier étage comporte des multiplexeurs 16-18 avec un signal de commande Sc que l'on met égal à un de façon à réaliser l'addition de X et Y. Pour cela on transmet les $x_i^+$ vers un second étage et les $x_i^-$ vers un troisième étage. Le second étage comporte des additionneurs 19-21 à trois entrées signées et deux sorties "+2" et "-" telles que :

| Résultat de l'opération | Sorties (+2;-) |
|---|---|
| 2 | 10 |
| 1 | 11 |
| 0 | 00 |
| -1 | 01 |

Par exemple si l'opération ( $y_0^+$ - $y_0^-$ + $x_0^+$ ) du bloc 21 a pour résultat le nombre deux, alors la sortie "+2" du bloc 21 sera à un, et la sortie "-" du bloc 21 sera à zéro.

Les blocs 22-24 sont également des additionneurs tels :

| Résultat de l'opération | Sorties (-2:+) |
|---|---|
| - 2 | 10 |
| - 1 | 11 |
| 0 | 00 |
| 1 | 01 |

Le résultat de ces opérations est le nombre S ($S_n^+ S_n^-$ ... $S_0^+ S_0^-$) qui est un nombre binaire redondant avec un codage à emprunt sauvegardé.

L'additionneur 10 de la figure 2 reçoit en entrée les nombres (A-B)C et (C-D) B, et permet de calculer la partie réelle R de la multiplication complexe.

L'additionneur 11 de la figure 2 reçoit en entrée les nombres (A+B)D et (C-D) B, et permet de calculer la partie imaginaire I de la multiplication complexe.

Le multiplieur complexe selon l'invention comporte un premier étage d'opérations de pré-multiplication réalisé avec de simples câblages. L'utilisation d'un format redondant avec un codage à emprunt sauvegardé et des convertisseurs 4, 5 et 6, permet de diviser par quatre le nombre de produits partiels à multiplier dans les multiplieurs réels 7, 8 et 9 par rapport à un multiplieur de nombres complexes n'utilisant pas ce type de codage.

Grâce notamment à la mise en oeuvre de ce codage à emprunt sauvegardé, ce dispositif réduit sensiblement la consommation d'énergie et le temps d'exécution des calculs.

Ce genre de multiplieur étant généralement couplé à un accumulateur, la conversion du codage à emprunt sauvegardé de R et I vers un codage binaire conventionnel du type complément à deux, est effectuée à la suite de l'accumulateur afin de profiter au maximum de la caractéristique de non propagation de retenue liée au codage à emprunt sauvegardé lors d'opérations d'addition dans l'accumulateur.

**Revendications**

**1.** Multiplieur de nombres complexes, **caractérisé par le fait qu'**il comprend :

- une entrée comportant des moyens aptes à recevoir la partie réelle A et la partie imaginaire B d'un premier nombre complexe, et la partie réelle C et la partie imaginaire D d'un deuxième nombre complexe, les nombres A, B, C, D étant des nombres binaires codés en complément à deux,
- un premier étage de traitement comportant des moyens de soustraction aptes à effectuer les opérations A-B et C-D, le résultat de chaque soustraction étant un nombre binaire en base deux avec un format binaire redondant et un codage à emprunt sauvegardé, et un module additionneur apte à effectuer l'opération A+B, le résultat de cette addition étant un nombre binaire en base deux avec un format redondant et un codage à retenue sauvegardée,

- un deuxième étage de traitement comportant des moyens de conversion aptes à convertir les nombres délivrés par le premier étage de traitement en des nombres binaires codés en base quatre avec un format redondant,
- un troisième étage de traitement comportant des moyens de multiplication aptes à effectuer les opérations (A-B)C, (C-D)B et (A+B)D, le résultat de ces opérations étant des nombres codés en base deux avec un format redondant, et
- un quatrième étage de traitement comportant deux additionneurs pour élaborer la partie réelle et la partie imaginaire du produit des deux nombres complexes d'entrée à partir des nombres délivrés par le troisième étage de traitement, ces parties réelles et imaginaires étant en base deux selon un format binaire redondant.

**2.** Multiplieur de nombres complexes selon la revendication 1, **caractérisé par le fait que** les moyens de soustraction comportent deux modules distincts aptes à effectuer les opérations A-B et C-D, et **par le fait que** les modules soustracteurs et additionneurs sont réalisés uniquement par câblage.

**3.** Multiplieur de nombres complexes selon l'une des revendications précédentes, **caractérisé par le fait que** les moyens de multiplication comportent trois multiplieurs réels distincts aptes à effectuer respectivement les opérations (A-B)C, (C-D)B et (A+B)D, et **par le fait que** chaque multiplieur comporte des moyens internes aptes à effectuer l'addition de deux produits partiels X et Y en effectuant l'opération $X-\bar{Y}-1$, où $\bar{Y}$ désigne le complément à 1 de Y.

**4.** Multiplieur de nombres complexes selon la revendication 3, **caractérisé par le fait que** les moyens internes des multiplieurs réels comportent un inverseur pour délivrer le nombre $\bar{Y}$ et un moyen de câblage pour réaliser la soustraction $X - \bar{Y}$.

**5.** Multiplieur de nombres complexes selon l'une des revendications précédentes, **caractérisé par le fait que** les multiplieurs et les additionneurs réels comportant des moyens aptes à effectuer un arbre binaire en codage à emprunt sauvegardé.

**Patentansprüche**

**1.** Multiplikator für komplexe Zahlen, **dadurch gekennzeichnet, daß** er folgendes umfaßt:

- einem Eingang mit Mitteln zum Empfangen des Realteils A und des Imaginärteils B einer ersten komplexen Zahl und des Realteils C und des Imaginärteils D einer zweiten komplexen Zahl, wobei die Zahlen A, B, C, D binär kodierte Zahlen im Zweierkomplement sind,
- eine erste Behandlungsstufe mit Subtrahiermitteln zum Bewirken der Operationen A-B und C-D, wobei das Ergebnis jeder Subtraktion eine Binärzahl zur Basis Zwei mit einem redundanten Binärformat und einer "borrow-save-"Kodierung (borgen-sichern), und einem Addiermodul zum Bewirken der Operation A+B, wobei das Ergebnis dieser Addition eine Binärzahl zur Basis Zwei mit einem redundanten Format und einer "carry-save-"Kodierung (übertragen-sichern) ist,
- eine zweite Behandlungsstufe mit Umwandlungsmitteln zum Umwandeln der von der ersten Behandlungsstufe abgegebenen Zahlen in zur Basis Vier kodierte Binärzahlen mit einem redundanten Format,
- eine dritte Behandlungsstufe mit Multipliziermitteln zum Bewirken der Operationen (A-B) C, (C-D) B und (A+B) D, wobei das Ergebnis dieser Operationen zur Basis Zwei kodierte Zahlen mit einem redundanten Format sind, und
- eine vierte Behandlungsstufe mit zwei Addierern zum Ausarbeiten des Realteils und des Imaginärteils des Produkts der zwei komplexen Eingangszahlen aus den durch die dritte Behandlungsstufe abgegebenen Zahlen, wobei diese Realteile und Imaginärteile zur Basis Zwei nach einem redundanten Binärformat sind.

**2.** Multiplikator von komplexen Zahlen nach Anspruch 1, **dadurch gekennzeichnet, daß** die Subtrahiermittel zwei verschiedene Moduln zum Bewirken der Operationen A-B und C-D umfassen, und dadurch, daß die Subtrahiermoduln und Addierer nur durch Verdrahtung realisiert sind.

**3.** Multiplikator von komplexen Zahlen nach einem der vorhergehenden Ansprüche, **dadurch gekennzeichnet, daß** die Multipliziermittel drei verschiedene reelle Multiplizierer zum Durchführen der Operationen (A-B) C, (C-D) B bzw. (A+B) D umfassen, und daß jeder Multiplikator interne Mittel zum Durchführen der Addition der zwei Teilprodukte X und Y durch Durchführen der Operation X-$\overline{Y}$-1 umfaßt, wobei $\overline{Y}$ das Komplement zu 1 von Y bezeichnet.

4. Multiplikator von komplexen Zahlen nach Anspruch 3, **dadurch gekennzeichnet, daß** die internen Mittel der reellen Multiplikatoren einen Inverter zum Abgeben der Zahl Y und ein Verdrahtungsmittel zum Realisieren der Subtraktion X-$\overline{Y}$ umfassen.

5. Multiplikator von komplexen Zahlen nach einem der vorhergehenden Ansprüche, **dadurch gekennzeichnet, daß** die reellen Multiplikatoren und die Addierer Mittel zum Durchführen eines "borrow-save-"Kodierungs-Binärbaums (borgen-sichern) umfassen.

**Claims**

1. Complex number multiplier, **characterized in that** it comprises:

   - an input comprising means able to receive the real part A and the imaginary part B of a first complex number, and the real part C and the imaginary part D of a second complex number, the numbers A, B, C, D being binary numbers coded in two's complement,
   - a first processing stage comprising subtraction means able to perform the operations A - B and C - D, the result of each subtraction being a base two binary number with a redundant binary format and a borrow-save coding, and an adder module able to perform the operation A + B, the result of this addition being a base two binary number with a redundant format and a carry-save coding,
   - a second processing stage comprising conversion means able to convert the numbers delivered by the first processing stage into base four coded binary numbers with a redundant format,
   - a third processing stage comprising multiplication means able to perform the operations (A - B),C, (C - D)B and (A + B)D, the result of these operations being base two coded numbers with a redundant format, and
   - a fourth processing stage comprising two adders for computing the real part and the imaginary part of the product of the two input complex numbers from the numbers delivered by the third processing stage, these real and imaginary parts being to the base two according to a redundant binary format.

2. Complex number multiplier according to Claim 1, **characterized in that** the subtraction means comprise two distinct modules able to perform the operations A - B and C - D, and **in that** the subtractor module and adder module are embodied solely by wiring.

3. Complex number multiplier according to one of the preceding claims, **characterized in that** the multiplication means comprise three distinct real multipliers able to perform the operations (A - B)C, (C - D)B and (A + B)D respectively, and **in that** each multiplier comprises internal means able to perform the addition of two partial products X and Y by performing the operation X-$\overline{Y}$-1, where $\overline{Y}$ denotes the 1's complement of Y.

4. Complex number multiplier according to Claim 3, **characterized in that** the internal means of the real multipliers comprise an inverter for delivering the number Y and a means of wiring for performing the subtraction X-$\overline{Y}$.

5. Complex number multiplier according to one of the preceding claims, **characterized in that** the real multipliers and adders comprise means able to perform a borrow-save coding binary tree.

## FIG_1

$$x_{W-1} \quad y_{W-1} \qquad x_2 \qquad y_2 \qquad x_1 \qquad y_1 \qquad x_0 \qquad y_0$$

$$Z_{R2W-1} \quad Z_{R2W-2} \qquad Z_{R5} \quad Z_{R4} \qquad Z_{R3} \quad Z_{R2} \qquad Z_{R1} \quad Z_{R0}$$

$$Z_{W-1} \qquad\qquad Z_2 \qquad\qquad Z_1 \qquad\qquad Z_0$$

## FIG_2

# FIG_3

# FIG_4

# FIG_5

Retenue

Retenue

Signe    $M_2$    $M_0$    $M_1$

12

# FIG_6

A

B

13

14

15

A×B

# FIG_7

$x_{n-1}^+$ $x_{n-1}^-$ $\quad$ $x_1^+$ $x_1^-$ $\quad$ $x_0^+$ $x_0^-$

$S_c$

$y_{n-1}^+$ $y_{n-1}^-$ $\quad$ $y_1^+$ $y_1^-$ $\quad$ $y_0^+$ $y_0^-$

+ − +

+2 −

+ − +

+2 −

+ − +

+2

$t_0 = 0$

$S_n^+$

− − +

−2 +

− − +

−2 +

− − +

−2 +

$t_0 = 0$

$S_n^-$ $\quad$ $S_{n-1}^+$ $S_{n-1}^-$ $\quad$ $S_2^-$ $\quad$ $S_1^+$ $S_1^-$ $\quad$ $S_0^+$ $S_0^-$